# EUROPEAN PATENT APPLICATION

(11) **EP 4 481 555 A1**
(43) Date of publication of application: **25.12.2024**
(21) Application number: 24305975.5
(22) Date of filing: 20.06.2024
(51) Int. Cl.: G06F 7/58

(54) **METHOD FOR GENERATING RANDOM NUMBER AND MICROCONTROLLER UNIT USING THE METHOD**

(30) Priority: 21.06.2023 CN 202310744405
(71) Applicant: SCHNEIDER ELECTRIC INDUSTRIES SAS, 92500 Rueil-Malmaison (FR)
(72) Inventor: ZHUANG, Hao, Shanghai, 201203 (CN); XIE, Juan, Shanghai, 201203 (CN); WANG, Yuanzhong, Shanghai, 201203 (CN); GEFFROY, Vincent, 38320 Eybens (FR); FENG, Siyang, Shanghai, 201203 (CN); YAN, Songxue, Shanghai, 201203 (CN); XU, Jungang, Shanghai, 201203 (CN)
(74) Representative: Manitz Finsterwald Patent- und Rechtsanwaltspartnerschaft mbB

(57) **Abstract**

A method of generating a random number for a microcontroller unit, the microcontroller unit using the method, an apparatus comprising the microcontroller unit are provided. The method includes: reading, from a flash memory of the microcontroller unit, a random number generated the previous time the microcontroller unit was powered on, in response to the microcontroller unit being powered on; acquiring, random information of the microcontroller unit and using the random information as a seed of a random number generation algorithm to generate the random number in a case that the reading fails, and using, the read random number as the seed of the random number generation algorithm to generate the random number in case that the reading succeeds; and writing, the generated random number to the flash memory of the microcontroller unit.

## Description

### TECHNICAL FIELD

The present disclosure relates to a method of generating a random number, a microcontroller unit using the method, and an apparatus comprising the microcontroller unit.

### BACKGROUND

There are some low-cost microcontroller unit (MCU) products that do not include random number generators (RNGs). However, in some application scenarios, an electrical device equipped with such a microcontroller unit is required to generate a random number. To avoid replacing such low-cost microcontroller unit products, a method of generating a random number that can be used in such a microcontroller unit is desirable.

### SUMMARY

According to an aspect of the present disclosure, a method of generating a random number for a microcontroller unit is provided. The method comprises: reading, from a flash memory of the microcontroller unit, a random number generated the previous time the microcontroller unit was powered on, in response to the microcontroller unit being powered on; acquiring, random information of the microcontroller unit and using the random information as a seed of a random number generation algorithm to generate the random number in a case that the reading fails, and using, the read random number as the seed of the random number generation algorithm to generate the random number in case that the reading succeeds; and writing, the generated random number to the flash memory of the microcontroller unit.

Optionally, writing the generated random number to the flash memory of the microcontroller unit comprises: writing the generated random number to one of a plurality of memory cells of a first space selected from the flash memory sequentially according to flash memory addresses of the plurality of memory cells, wherein each of the plurality of memory cells corresponds to a minimum writing unit of the flash memory.

Optionally, reading, from a flash memory of the microcontroller unit, a random number generated the previous time the microcontroller unit was powered on comprises: searching for the memory cell where a latest random number was written among the plurality of memory cells of the first space and reading the random number in the memory cell; and erasing the first space to reuse the first space for storing a new random number in a case that the last memory cell of the first space in order of flash memory addresses has been written with a random number.

Optionally, the first space comprises a plurality of pages, and wherein writing the generated random number to the flash memory of the microcontroller unit further comprises: when the flash memory address of the memory cell of the first space where a random number is to be written is a start address of one of the plurality of pages, writing a predetermined value to a memory cell of a plurality of memory cells of a second space selected from the flash memory that is used to record a usage of the page, wherein the plurality of memory cells of the second space are used for recording the usage of each of the plurality of pages of the first space, respectively.

Optionally, searching for the memory cell where the latest random number was written among the plurality of memory cells of the first space comprises: searching for the memory cell where the latest random number was written among the page of a first space corresponding to the memory cell in the second space where the predetermined value was written latest.

Optionally, the plurality of memory cells of the second space are also erased while the first space is erased.

According to another aspect of the present disclosure, another method of generating a random number for a microcontroller unit is provided. The method comprises: acquiring, random information of the microcontroller unit in response to the microcontroller unit being powered on; and generating, the random number by using the random information as a seed of a random number generation algorithm, wherein the random information comprises a reading of a general-purpose input/output (GPIO) port that is in a floating state of the microcontroller unit and/or a clock difference between a high speed internal clock and a low speed internal clock of the microcontroller unit.

According to another aspect of the present disclosure, a microcontroller unit is provided. The microcontroller unit comprises: a reading module, configured to read, from a flash memory of the microcontroller unit, a random number generated the previous time the microcontroller unit was powered on, in response to the microcontroller unit being powered on; an acquiring module, configured to acquire random information of the microcontroller unit in a case that the reading fails; a random number generating module, configured to generate a random number by using the random information as a seed of a random number generation algorithm in a case that the reading fails, and to generate the random number by using the read random number as a seed of the random number generation algorithm in a case that the reading succeeds; and a writing module, writing the generated random number to the flash memory of the microcontroller unit.

According to another aspect of the present disclosure, another microcontroller unit is provided. The microcontroller unit comprise: an acquisition module, configured to acquire random information of the microcontroller unit in response to the microcontroller unit being powered on, wherein the random information comprises a reading of a general-purpose input/output (GPIO) port that is in a floating state of the microcontroller unit and/or a clock difference between a high-speed internal clock and a low-speed internal clock of the microcontroller unit; and a random number generating module, configure to generate a random number by using the random information as a seed of a random number generation algorithm.

According to another aspect of the present disclosure, an apparatus is provided. The apparatus comprises the microcontroller unit described above.

According to another aspect of the present disclosure, a computer-readable storage medium is provided. The computer-readable storage medium has instructions stored thereon which, when executed by a processor, cause the processor to carry out the method described above.

The method of generating a random number and the microcontroller unit using the method according to the above aspects of the present disclosure can generate a random number by using the reading of the GPIO port that is in the floating state of the microcontroller unit itself and the randomness of the clock difference between the high-speed internal clock and the low-speed internal clock of the microcontroller unit. The method of generating a random number and the microcontroller unit using the method do not rely on an RNG module and do not require an additional component so that they are suitable for the application scenario described above where the low-cost microcontroller unit product without an RNG module is required to generate a random number.

### BRIEF DESCRIPTION OF DRAWINGS

Aspects, features, and advantages of the present disclosure will become more apparent and readily appreciated from the following description of embodiments taken in conjunction with the accompanying drawings, in which:
FIG. 1 is an exemplary flowchart of the method of generating a random number according to an embodiment of the present disclosure;
FIGS. 2A and 2B are exemplary distribution plots of the random numbers generated according to the method of generating a random number shown in FIG. 1;
FIG. 3 is an exemplary flowchart of the method of generating a random number according to another embodiment of the present disclosure;
FIG. 4 is an exemplary distribution plot of the random numbers generated according to the method of generating a random number shown in FIG. 3;
FIG. 5 is an exemplary distribution plot of the random numbers generated by the microcontroller unit having an RNG module by using the RNG module;
FIG. 6 is an exemplary structure diagram of a first space according to an embodiment of the present disclosure;
FIG. 7 is a diagram illustrating an exemplary process of searching for the latest stored random number using a binary search algorithm according to an embodiment of the present disclosure;
FIG. 8 is an exemplary structural diagram of the first space and a second space according to another embodiment of the present disclosure;
FIG. 9 is an exemplary block diagram of a microcontroller unit according to an embodiment of the present disclosure;
FIG. 10 is an exemplary block diagram of an apparatus including the microcontroller unit according to an embodiment of the present disclosure; and
FIG. 11 is an exemplary diagram of a computer-readable storage medium according to an embodiment of the present disclosure.

### DETAILED DESCRIPTION

The detailed description of the present disclosure will be made below with reference to exemplary embodiments of the present disclosure. However, the present disclosure is not limited to the embodiments described herein, which may be embodied in many different forms. The described embodiments are provided so that this disclosure will be thorough and complete and will fully convey the concept of the disclosure to those skilled in the art. Features of the various described embodiments may be combined with or substituted for one another, unless explicitly excluded or should be excluded from the context.

Unless otherwise defined, technical or scientific terms used in the present disclosure shall have their ordinary meanings as understood by those skilled in the art to which the present disclosure belongs. The terms "first", "second", and the like, as used in this disclosure, do not denote any order, quantity, or importance, but are merely used to distinguish between different components.

In the drawings, the same reference numbers denote components of the same or similar structure or function, and repeated description of them will be omitted from the following description.

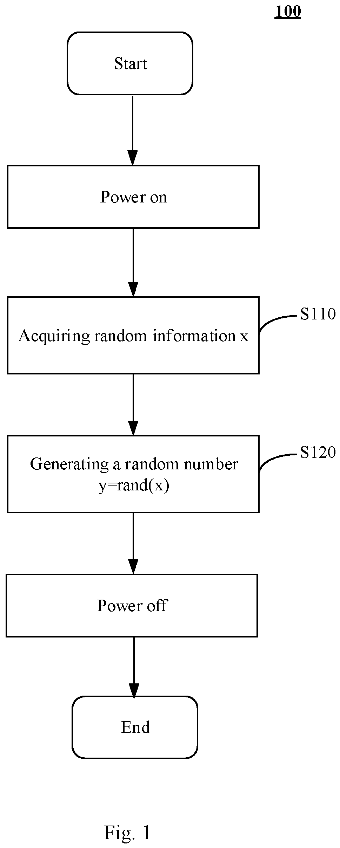

FIG. 1 is an exemplary flowchart of the method of generating a random number according to an embodiment of the present disclosure.

Referring to FIG. 1, the method 100 for generating a random number according to an embodiment of the present disclosure includes steps S110 and S120.

At step S110, the random information of the microcontroller unit may be acquired in response to the microcontroller unit being powered on. The random information may include, for example, a reading of the GPIO port that is in the floating state of the microcontroller unit and/or the clock difference between the High Speed Internal (HSI) Clock and Low Speed Internal (LSI) Clock of the microcontroller unit.

In one example, the reading of the GPIO port that is in the floating state may be used as a seed for generating a random number. The GPIO port that is in the floating state may be considered as a switch that is not electrically connected, such that the level of a signal input to the GPIO port is uncertain. An interfering signal due to the presence of electromagnetic radiation and other noise sources in the surrounding environment may be transmitted onto the GPIO port, causing the reading of the GPIO port to be random. In addition, the GPIO port may be very sensitive to a small current or voltage fluctuation from its surroundings because the input impedance of the input circuit of the GPIO port is typically very high. This sensitivity may further increase the randomness of its reading in the floating state. Such randomness of the GPIO port can be avoided by connecting it to ground or a power source via a pull-up or pull-down resistor, but it can be used as the seed for generating a random number in the present disclosure.

In another example, the clock difference between the HSI clock and the LSI clock of the microcontroller unit may be used as the seed for generating a random number. Typically, at least two clock sources, the HSI clock and the LSI clock, which are independent of each other, are included in the microcontroller unit. Since the accuracy of the HSI clock is high and the accuracy of the LSI clock is low, there is a clock difference between the HSI clock and the LSI clock. For example, the clock difference between the HSI clock and the LSI clock, i.e., the clock error of the LSI clock when the HSI clock is used as the clock reference, can be detected by counting the number of HSI clock signals between the two consecutive edges of one LSI clock signal. For example, given that the frequency of the HSI clock is 8 MHz and the frequency of the LSI clock is 8000 Hz, the number of HSI clock signals between two consecutive edges of one LSI signal may be 880 due to the random error in the LSI clock. This means that the actual clock period of the LSI clock is 110 *µs,* and thus there is a clock error of 15 *µs* with respect to its nominal clock period of 125 *µs.* The numerical value of 15 can be used as the seed to generate a random number.

In yet another example, a combination of the reading of the GPIO port and the clock difference between the HSI clock and the LSI clock as described above may also be used as the seed for generating a random number. For example, the result of a function calculated by taking the reading and the clock difference as the arguments of the function (e.g., the function may take the average or median of the the reading and the clock difference, etc.) may be used as the seed for generating a random number.

The random number generation algorithm may be any algorithm known to those skilled in the art or that may emerge in the future that can generate a random number based on a random number seed. It will not be enumerated in detail here to avoid obscuring the disclosure.

As shown in FIG. 1, at step S110, the random information x of the microcontroller unit may be acquired in response to the microcontroller unit being powered on. At step S120, a random number y may be generated by using the random information x as the seed of the random number generation algorithm. In a particular application scenario, it is expected that the microcontroller unit is capable of generating random numbers and that the random number generated by the microcontroller unit each time it is powered on is different from the random number generated by the microcontroller unit the previous time it was powered on. Steps S110 and S120 may be performed each time the microcontroller unit is powered on. For example, the acquired random information corresponding to n times of power on of the microcontroller unit may be x₀ to xₙ₋₁, respectively, and the generated random numbers corresponding to n times of power on of the microcontroller unit may be y₀ to yₙ₋₁, respectively, where n is an integer greater than 1. However, the present disclosure is not limited thereto. Steps S110 and S120 may be performed at any time when the generation of a random number is required. For example, in another application scenario, steps S110 and S120 may also be performed iteratively or circularly after the microcontroller unit is powered on to generate a plurality of random numbers.

As such, the method 100 for generating a random number according to an embodiment of the present disclosure may use the random information provided by the microcontroller unit itself as a seed to generate a random number. This can eliminate the need to configure an RNG module or an additional component and satisfy the requirement that the random number generated each time the microcontroller unit is powered on is different from the random number generated the previous time the microcontroller unit was powered on in a particular application scenario. This allows the method 100 to be used for low-cost microcontroller unit products without RNG modules.

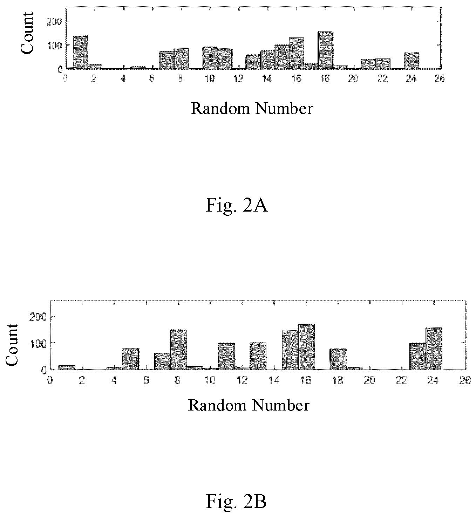

FIGS. 2A and 2B are exemplary distribution plots of the random numbers generated according to the method of generating a random number shown in FIG. 1.

Referring to FIG. 2A, a distribution of the random numbers generated by using the readings of the GPIO port that is in the floating state of the microcontroller unit as seeds for a random number generation algorithm is shown. For example, the acquired readings of the GPIO port that is in the floating state corresponding to the first to the n-th times of power on of the microcontroller unit are x₀ to xₙ₋₁, respectively. The random numbers y₀ to yₙ₋₁ are generated by taking the x₀ to xₙ₋₁ as seeds of the random number generation algorithm respectively, where n is an integer greater than 1. As shown, 1 is generated about 130 times, 2 is generated about 10 times, 14 is generated about 80 times, and so on.

Referring to FIG. 2B, a distribution of the random numbers generated by using the clock differences between the HSI clock and the LSI clock of the microcontroller unit as seeds for the random number generation algorithm is shown. For example, the acquired clock differences between the HSI clock and the LSI clock corresponding to the first to the n-th times of power up of the microcontroller unit are x₀ to xₙ₋₁, respectively. The random numbers y₀ to yₙ₋₁ are generated by taking the x₀ to xₙ₋₁ as seeds of the random number generation algorithm respectively, where n is an integer greater than 1. For example, 1 is generated about 10 times, 5 is generated about 80 times, 8 is generated about 150 times, and so on.

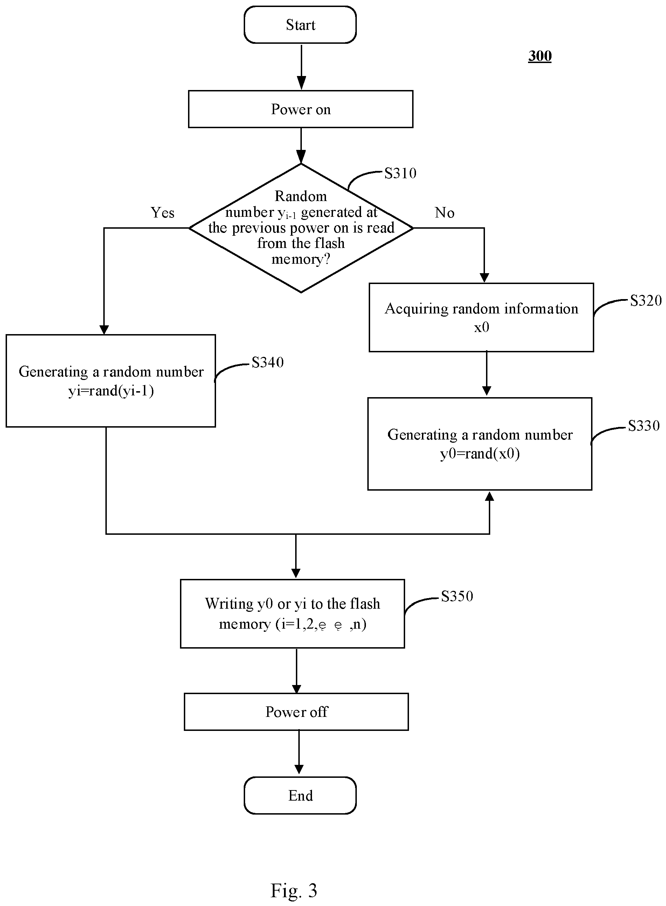

FIG. 3 is an exemplary flowchart of the method of generating a random number according to another embodiment of the present disclosure.

Unlike the method 100, which uses the readings of the GPIO port that is in floating state or the clock differences between the HSI clock and the LSI clock as the seeds to generate random numbers each time the microcontroller unit is powered on, the method 300 may use the reading of the GPIO port that is in the floating state or the clock difference between the HSI clock and the LSI clock as the seed to generate the first random number only when the microcontroller unit is powered on for the first time and then call the previously generated random number as the seed to generate the next random number each time the microcontroller unit is powered on.

Referring to FIG. 3, the method 300 includes steps S310 to S350.

At step S310, the random number generated at the previous power on of the microcontroller unit may be read from the flash memory of the microcontroller unit in response to the microcontroller unit being powered on. If the reading fails, it is indicated that the microcontroller unit has not generated a random number and the method proceeds to step S330. For example, the first random number has not been generated when the microcontroller unit is powered on for the first time, when the microcontroller unit is reset or when the method 300 is performed on the microcontroller unit for the first time. If the reading is successful, it is indicated that a random number was generated the previous time the microcontroller unit was powered on and the method proceeds to step S340.

At step S320, the random information of the microcontroller unit is acquired. As previously described, such random information may include, for example, readings of the GPIO port that is in the floating state of the microcontroller unit and/or the clock difference between the HSI clock and the LSI clock of the microcontroller unit. The method then proceeds to step S330. At step S330, the first random number may be generated by using the acquired random information as the seed of the random number generation algorithm.

At step S340, the random number may be generated by using the random number read in step S310 as the seed of the random number generation algorithm.

At step S350, the first random number generated at step S330 or the random number generated at step S340 may be written to the flash memory of the microcontroller unit.

For example, taking the function of rand() as an example random number generation algorithm, when the microcontroller unit is powered on for the first time, the operation of reading the random number from the flash memory of the microcontroller unit can be failed because no random number has been written to the flash memory. Then, the random information x₀ (e.g., the reading of the GPIO port or the clock difference between the HSI clock and the LSI clock) can be acquired and the first random number y₀ = rand (x₀) can be be generated by using the x₀ as the seed. The first random number y₀ can then be written to the flash memory. When the microcontroller unit is powered on for the second time, the operation of reading the random number generated the first time the microcontroller unit was powered on from the flash memory of the microcontroller unit can be successful. The second random number y₁ = rand (y₀) can then be generated by using the read random number as the seed. The second random number y₁ can also be written to the flash memory. Similarly, corresponding to the i-th power on of the microcontroller unit, yᵢ = rand (yi-i), where i = 1, 2,..., n, where n is an integer greater than or equal to 1.

It should be understood that, for ease of explanation, the microcontroller unit is described as generating one random number at each power on, but the present disclosure is not limited thereto. The random number may be generated at any time. The microcontroller unit may also generate a plurality of random numbers at each power on, wherein each random number is generated by using the previously generated random number as the seed.

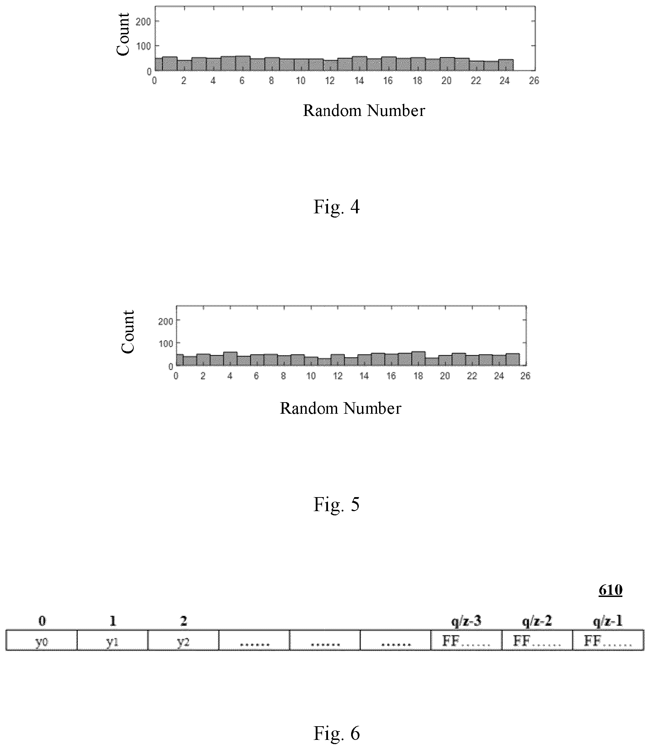

FIG. 4 is an exemplary distribution plot of the random numbers generated according to the method of generating a random number shown in FIG. 3.

Referring to FIG. 4, the distribution of the random numbers generated by performing the method 300 using the reading of the GPIO port that is in the floating state of the microcontroller unit as the initial seed is shown. For example, 0 is generated for about 50 times, 1 is generated for about 55 times, 3 is generated for about 45 times, and so on.

Comparing FIG. 4 with FIGS. 2A and 2B, it can be seen that the randomness of the distribution of the random numbers shown in FIG. 4 is obviously better than that of the distribution of the random numbers shown in FIGS. 2A and 2B.

FIG. 5 is an exemplary distribution plot of the random numbers generated by the microcontroller unit having an RNG module by using the RNG module.

Comparing FIG. 4 with FIG. 5, it can be seen that the randomness of the distribution of the random numbers shown in FIG. 4 is of comparable randomness to the distribution of the random numbers shown in FIG. 5.

As such, the random number generation method 300 according to another embodiment of the present disclosure uses the random information provided by the microcontroller unit itself as an initial seed to generate a random number. This can eliminate the need to configure an RNG module or an additional component, and satisfy the requirement that the random number generated at each powered on of the microcontroller unit be different from the random number generated at the previous powered on of the microcontroller unit in a particular application scenario. The method 300 can be suitable for the low-cost microcontroller unit products that do not include RNG modules, as well as for replacing the functionality of RNG modules in the microcontroller unit products that include RNG modules.

The the basic principles of the random number generation method according to an embodiment of the present disclosure are described above, which include reading the random number (step S310) and storing the random number (step S350). How the random number is stored in the flash memory of the microcontroller unit and how the random number is read from the flash memory will be explained in more detail below in connection with FIGS. 6 to 8.

FIG. 6 is an exemplary structure diagram of a first space according to an embodiment of the present disclosure.

As previously described with respect to method 300, the next random number may be generated by calling the previously generated random number as the seed, and the random number may be written to the flash memory of the microcontroller unit each time the random number is generated. To perform such storage, the first space for these random numbers may be selected from the flash memory. The first space may include a plurality of memory cells each of which corresponds to the minimum writing unit of the flash memory and each written random number occupies one memory cell. It is known that the number of times the flash memory of the microcontroller unit can be erased and written is limited, e.g., to z times, e.g., z equals ten thousand. In a particular application scenario, the electrical device including the microcontroller unit may need to generate one random number each time it is powered on, and thus it may need to be powered on q times during its lifetime and the order of magnitude of the q can be up to tens of millions. Thus, the first space may include q/z memory cells.

Taking the first space 610 shown in FIG. 6 as an example. The first space 610 includes q/z memory cells, wherein the respective memory cells are numbered as 0, 1, 2, ..., q/z-3, q/z-2, q/z-1 and they are sequentially arranged according to their flash memory address. Writing the generated random number to the flash memory of the microcontroller unit during the step S350 may include writing sequentially the generated random number to one of the plurality of memory cells of the selected first space per the flash memory addresses of the plurality of memory cells in the flash memory. For example, the first random number y₀ can be written to the memory cell numbered 0 when the y₀ is generated; the second random number y₁ can be written to the memory cell numbered 1 when the y₁ is generated; the third random number y₂ may be written to the memory cell numbered 2 when the y₂ is generated, and so on. These memory cells, before being written with the random number, are in a state of never unused or in a state of used and then erased, i.e., all the bit values are 1, indicated by "FF..." in this figure.

As previously described, at step S340, the latest stored random number (i.e., the previous random number) may be read from the flash memory as the seed for the random number generation algorithm to generate the next random number. The reading may include searching the plurality of memory cells of the first space for the memory cell to which the latest random number was written and reading the random number therein, and erasing the first space 610 to reuse the first space for storing a new random number in a case that the last memory cell of the first space in order of the flash memory address was written with a random number.

Taking the first space 610 shown in FIG. 6 as an example, since the random numbers are sequentially written to the memory cells numbered from 0 to q/z-1 in order of the flash memory addresses, a memory cell to which the latest random number was written may be searched among these memory cells by using, for example, a binary search algorithm or other algorithms having the similar function. The process of searching for the latest stored random number is explained below by taking the binary search algorithm as an example.

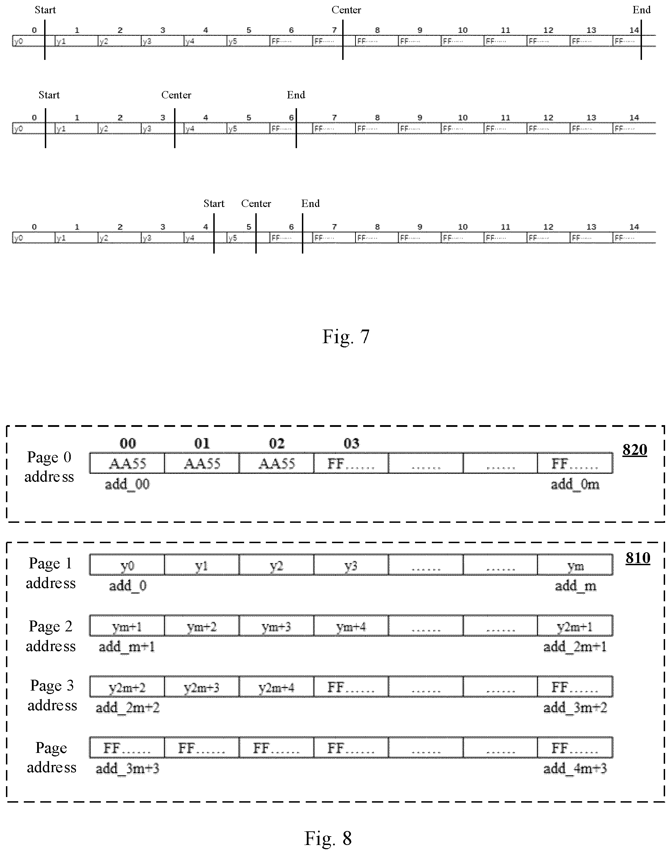

FIG. 7 is a diagram illustrating an exemplary process of searching for the latest stored random number using a binary search algorithm according to an embodiment of the present disclosure.

Referring to FIG. 7, for ease of illustration, it is assumed that the first space has only 15 memory cells.

First, if the value of the memory cell numbered 14 being "FF...", it can be determined that the first space has not been written in full. In contrast, if the value of the memory cell numbered 14 is not "FF...", the first space has been written in full, and the random number stored in the memory cell numbered 14 is the latest stored random number (i.e., the previous random number).

In diagram 710, taking the memory cells numbered from 0 to 14 as the search range, the center of this range is the memory cell numbered 7. It may be determined to continue searching among the memory cells numbered from 0 to 6 according to the value of the memory cell numbered 7 is "FF...".

In diagram 720, taking the memory cells numbered from 0 to 6 as the search range, the center of this range is the memory cell numbered 3. It can be determined to continue searching among the memory cells numbered from 4 to 6 according to the value of the memory cell numbered 3 is not "FF..." and the memory cell numbered 4 is also not "FF...".

In diagram 730, taking the memory cells numbered from 4 to 6 as the search range, the center of this range is the memory cell numbered 5. It can be determined that the memory cell numbered 5 is the memory cell to which the latest random number was written according to the value of the memory cell numbered 5 is "FF..." and the value of the memory cell numbered 6 is "FF...". Thus, the random number y₅ in the memory cell numbered 5 can be read as the seed for generating the next random number. The principle of the binary search algorithm is well known, and details are omitted herein for conciseness.

After reading the latest stored random number, it can be determined whether the first space is written in full, and if so, the first space can be erased to reuse the first space for storing a new random number. Since the random numbers are written sequentially to the memory cells in order of the flash memory addresses, it can be determined that the first space is written in full. The first space can then be erased if the last memory cell of the first space in order of the flash memory addresses has been written with a random number.

For example, as previously described, in the example of FIG. 7, if it is determined that the value of the memory cell numbered 14 is not "FF..." by using the binary search algorithm, it can be determined that the first space has been written in full, and the random number stored in the memory cell numbered 14 is the latest stored random number (i.e., the previous random number).

As such, the first space, which can support the number of random numbers required to be read and written, can be selected from the flash memory of the microcontroller unit according to the number. The first space can be dedicated to the reading and writing of the random numbers. This allows the space of the flash memory to be used efficiently, thereby preventing the flash memory from being insufficient to support the entire lifetime of the electrical device due to a certain single flash memory address being read and written too many times.

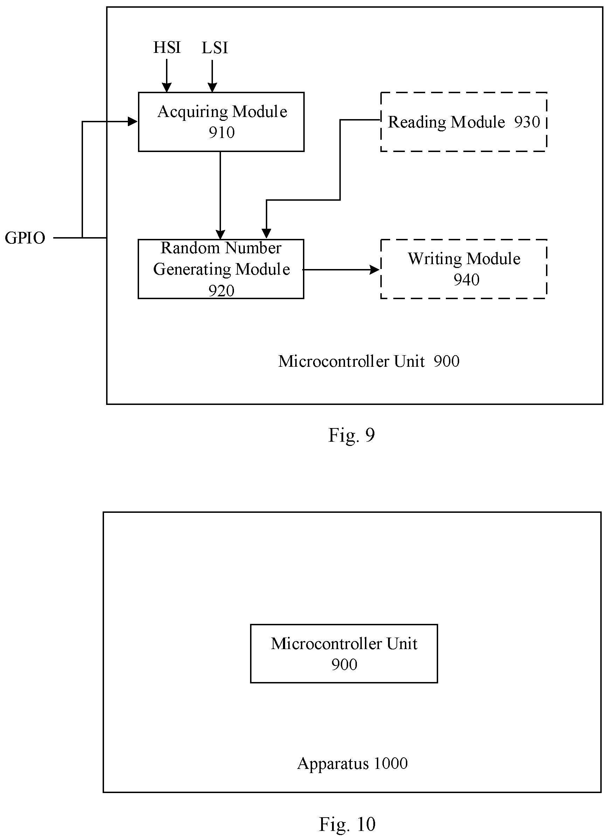

FIG. 8 is an exemplary structural diagram of the first space and a second space according to another embodiment of the present disclosure .

In one example, the above first space dedicated to the reading and writing of random numbers may include a plurality of pages according to the number of random numbers that required to be read and written. To facilitate the reading and writing of the random numbers, a second space may also be selected from the flash memory for recording the usage of a plurality of pages of the first space. The second space may include a plurality of memory cells for recording the usage of each of a plurality of pages of the first space, respectively. In this case, the reading of the latest stored random number from the flash memory during step S340 may further include writing a predetermined value to the memory cell, that is used for recording the usage of the page, when the flash memory address of the memory cell in the first space to which a random number is to be written is a start address of the page.

Taking the example shown in FIG. 8 as an example, the first space 810 may include the pages 1 to 4 and each of the pages may include m (e.g., m may be 256 or other value) memory cells. For example, page 1 may include the memory cells with flash memory addresses from add_0 to add_m; page 2 may include the memory cells with flash memory addresses from add_m + l to add_2m + l, and so on. In order to record the usage of the pages 1 to 4, page 0 may be selected as the second space. The memory cells numbered from "00" to "03" in this figure may be memory cells in the second space for recording the usage of each of the pages 1 to 4, respectively. For example, when a flash memory address of the memory cell to be written with a random number is a start address "add _ 0" of page 1 (e.g., the write address *writeaddress =* add _ 0), the predetermined value "AA55" may be written into a memory cell numbered 00; when the flash memory address of the memory cell to be written with the random number is the start address "add _ m + l" of page 2 (e.g., the write address *writeaddress =* add _ m + l), the predetermined value "AA55" may be written into the memory cell of numbered 01; and so on. The memory cells numbered from 00 to 03, before being written to the predetermined value, are in a state of unused or in a state of used and then erased, i.e., all the bit values are 1, indicated in the figure by "FF...".

Due to the presence of the second space, the reading of the latest stored random number from the flash memory during step S340 may include: searching for the memory cell where the latest random number was written among the page of the first space corresponding to the memory cell in the second space where the predetermined value was latest written.

Taking the example shown in FIG. 8 as an example, according to the value of the memory cells numbered from 00 to 02 in the second space 820 each being "AA55" and the value of the memory cell numbered 03 being "FF... ", it can be determined that the memory cell numbered 02 is the memory cell where the predetermined value "AA55" was latest written. The page of the first space corresponding to the memory cell of numbered 02 is page 3, then the memory cell with the flash memory address of ADD _ 2M +4 in page 3 can be searched as the memory cell where the latest random number was written by using the binary search algorithm or other algorithms with the same function. The random number y₂ₘ₊₄ in this memory cell can be read, and the next random number can be generated using this random number as the seed. An example process of the binary search algorithm has been described above and will not be repeated here.

Due to the presence of the second space, a plurality of memory cells of the second space, which are used for recording the usage of each of a plurality of pages of the first space respectively, should be erased while the first space is determined to be written in full and then be erased.

Taking the example shown in FIG. 8 as an example, if the memory cell with the flash memory address add _ 4m +3 is also written with a random number, it can be determined that the first space 810 is written infull, thereby erasing all of the memory cells in the first space 810 and the memory cells numbered from 00 to 03 in the second space 820.

Alternatively, the memory cell numbered 00 in the first space 810 and the memory cell numbered 00 in the second space 820 may be erased first, and the respective memory cells numbered from 01 to 03 in the respective pages and the second space may be erased when the random number is to be written to the starting memory cell of each of the remaining pages 2 to 4.

It is described above that the random numbers are written sequentially in the order of page 1 to page 4, but the present disclosure is not limited thereto, and the random numbers may also be written in a different order of the pages.

FIG. 9 is an exemplary block diagram of a microcontroller unit according to an embodiment of the present disclosure.

Referring to FIG. 9, in one embodiment, the microcontroller unit 900 may include an acquiring module 910 and a random number generating module 920. The acquiring module 910 may acquire random information of the microcontroller unit 900 in response the microcontroller unit being powered on. The random information may include the reading of the GPIO port that is in floating state of the microcontroller unit and/or the clock difference between the HSI clock and the LSI clock of the microcontroller unit. The random number generating module 920 may generate a random number by using the random information as the seed of the random number generation algorithm.

In an alternative embodiment, the microcontroller unit 900 may further include a reading module 930 and a writing and storing module 940. The reading module 930 may read the random number generated at the previous power-up of the microcontroller unit from the flash memory of the microcontroller unit in response to the power-up of the microcontroller unit. In the alternative embodiment, instead of acquiring the random information as long as the microcontroller unit is powered on, the acquiring module 910 may acquire the random information of the microcontroller unit only when the reading by the reading module 930 fails. In this alternative embodiment, the random number generating module 920 may generate a random number using the random information collected by the collecting module 910 as a seed of the random number generation algorithm in the case that the reading by the reading module 930 fails and may generate a random number using the read random number as a seed of the random number generation algorithm in the case that the reading by the reading module 930 succeeds. The writing module may be used for writing the random number generated by the random number generating module 920 to the flash memory of the microcontroller unit.

Only a portion of the microcontroller unit 900 according to an embodiment of the present disclosure is described above in connection with FIG. 9, and the acquiring module 910, the random number generating module 920, the reading module 930 and the writing module 940 may make reference and citation to the foregoing method 100 or 300 for generating a random number and additional aspects thereof and their related drawings. For example, one or more steps of the foregoing method 300 may be modified to implement the collecting module 910, the random number generating module 920, the reading module 930, and the writing module 940 and additional aspects thereof. To avoid repetition, details are omitted herein.

FIG. 10 is an exemplary block diagram of an apparatus including the microcontroller unit according to an embodiment of the present disclosure.

The apparatus 1000 may be any electrical device that requires a functionality of generating a random number, such as, a frequency regulator that needs to generate a random number to simulate a random variation of the load to achieve frequency control and stability of a power system; a randomized power source that needs to generate a random number to generate a randomized power source waveform to reduce electromagnetic interference, noise and harmonics; a random sampling device that needs to generate random time points to ensure fairness and accuracy of sampling; a load simulator that needs to generate a random number to simulate the random behavior of a real load to evaluate performance and stability of a power system, and a distributed power system device that needs to generate a random number to generate random energy distribution schemes to achieve power balancing and optimization, and the like.

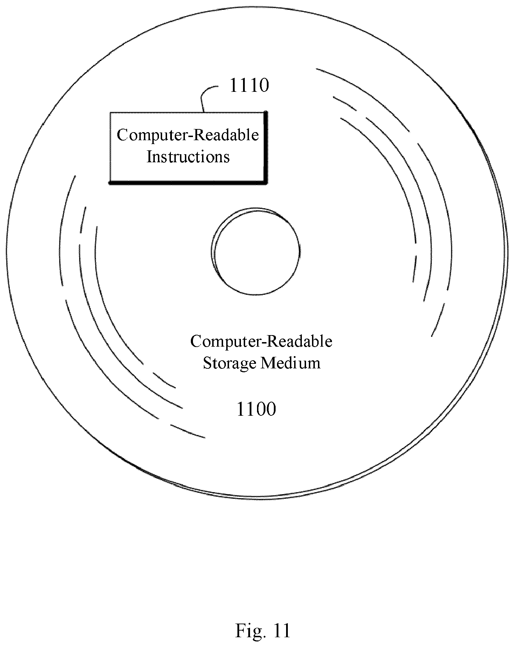

FIG. 11 is an exemplary diagram of a computer-readable storage medium according to an embodiment of the present disclosure.

Referring to FIG. 11, the computer-readable storage medium 1100 has stored computer program instructions 1110 thereon. When the computer program instructions 1110 are executed by a processor, the above method 100 or 300 for generating a random number is performed.

The computer-readable storage medium 1100 may include but is not limited to, e.g., volatile memory and/or non-volatile memory and/or any recording medium having the same function as that would be conceivable by one of ordinary skill in the art to which the present disclosure pertains. The volatile memory may include, e.g., random access memory (RAM), cache and/or the like. The non-volatile memory may include, e.g., a read-only memory (ROM), a hard disk, a flash memory, an optical disk, a magnetic disk, and/or the like.

The computer-readable program instructions 1110 may be assembler instructions, instruction set architecture (ISA) instructions, machine instructions, machine-dependent instructions, microcode, firmware instructions, state setting data, configuration data for an integrated circuit, or either source code or object code written in any combination of one or more programming languages, including an object-oriented programming language such as Smalltalk, C ++, or the like, and procedural programming languages, such as the "C" programming language or similar programming languages.

The basic principle of the present disclosure has been described above in connection with the specific embodiments. However, it should be noted that the advantages, benefits, effects etc. mentioned in the present disclosure are only examples and not limitations, and these advantages, benefits, effects etc. cannot be considered to be necessarily possessed by the respective embodiments of the present disclosure. In addition, the foregoing specific details have been set forth merely for purposes of illustration and understanding and are not intended to be limiting and are not intended to limit the disclosure to the extent that the specific details must be employed to practice the disclosure. Those skilled in the art will recognize certain variations, modifications, changes, additions, and sub-combinations thereof without departing from the scope of the present disclosure.

## Claims

1. A method of generating a random number for a microcontroller unit, comprising:
reading, from a flash memory of the microcontroller unit, a random number generated the previous time the microcontroller unit was powered on, in response to the microcontroller unit being powered on;
acquiring, random information of the microcontroller unit and using the random information as a seed of a random number generation algorithm to generate the random number in a case that the reading fails, and using, the read random number as the seed of the random number generation algorithm to generate the random number in case that the reading succeeds; and
writing, the generated random number to the flash memory of the microcontroller unit.

2. The method of claim 1, wherein writing the generated random number to the flash memory of the microcontroller unit comprises:
writing the generated random number to one of a plurality of memory cells of a first space selected from the flash memory sequentially according to flash memory addresses of the plurality of memory cells, wherein each of the plurality of memory cells corresponds to a minimum writing unit of the flash memory.

3. The method of claim 2, wherein reading, from a flash memory of the microcontroller unit, a random number generated the previous time the microcontroller unit was powered on comprises:
searching for the memory cell where a latest random number was written among the plurality of memory cells of the first space and reading the random number in the memory cell; and
erasing the first space to reuse the first space for storing a new random number in a case that the last memory cell of the first space in order of flash memory addresses has been written with a random number.

4. The method of claim 3, wherein,
the first space comprises a plurality of pages, and
wherein writing the generated random number to the flash memory of the microcontroller unit further comprises: when the flash memory address of the memory cell of the first space where a random number is to be written is a start address of one of the plurality of pages, writing a predetermined value to a memory cell of a plurality of memory cells of a second space selected from the flash memory that is used to record a usage of the page, wherein the plurality of memory cells of the second space are used for recording the usage of each of the plurality of pages of the first space, respectively.

5. The method of claim 4, wherein searching for the memory cell where the latest random number was written among the plurality of memory cells of the first space comprises:
searching for the memory cell where the latest random number was written among the page of a first space corresponding to the memory cell in the second space where the predetermined value was written latest.

6. The method of claim 4, wherein,
the plurality of memory cells of the second space are also erased while the first space is erased.

7. A method of generating a random number for a microcontroller unit, comprising:
acquiring, random information of the microcontroller unit in response to the microcontroller unit being powered on; and
generating, the random number by using the random information as a seed of a random number generation algorithm,
wherein the random information comprises a reading of a general-purpose input/output (GPIO) port that is in a floating state of the microcontroller unit and/or a clock difference between a high speed internal clock and a low speed internal clock of the microcontroller unit.

8. A microcontroller unit comprising:
a reading module, configured to read, from a flash memory of the microcontroller unit, a random number generated the previous time the microcontroller unit was powered on, in response to the microcontroller unit being powered on;
an acquiring module, configured to acquire random information of the microcontroller unit in a case that the reading fails;
a random number generating module, configured to generate a random number by using the random information as a seed of a random number generation algorithm in a case that the reading fails, and to generate the random number by using the read random number as a seed of the random number generation algorithm in a case that the reading succeeds; and
a writing module, writing the generated random number to the flash memory of the microcontroller unit.

9. A microcontroller unit comprising:
an acquisition module, configured to acquire random information of the microcontroller unit in response to the microcontroller unit being powered on, wherein the random information comprises a reading of a general-purpose input/output (GPIO) port that is in a floating state of the microcontroller unit and/or a clock difference between a high-speed internal clock and a low-speed internal clock of the microcontroller unit; and
a random number generating module, configure to generate a random number by using the random information as a seed of a random number generation algorithm.

10. An apparatus comprising:
the microcontroller unit according to any one of claim 8 or 9.

11. A computer-readable storage medium having instructions stored thereon which, when executed by a processor, cause the processor to carry out the method of any one of claims 1-7.
